# EUROPÄISCHE PATENTSCHRIFT

(11) **EP 1 002 351 B1**
(45) Veröffentlichungstag und Bekanntmachung des Hinweises auf die Patenterteilung: **08.10.2003**
(21) Anmeldenummer: 97948890.5
(22) Anmeldetag: 06.11.1997
(51) Int. Cl.: H02B 1/30, H02B 1/32

(54) **RAHMENGESTELL MIT MEHREREN MONTAGEEBENEN**
RACK WITH SEVERAL ASSEMBLY LEVELS
BAIE COMPORTANT PLUSIEURS PLANS DE MONTAGE

(30) Priorität: 19.11.1996 DE 19647727
(43) Veröffentlichungstag der Anmeldung: 24.05.2000
(73) Patentinhaber: Rittal-Werk Rudolf Loh GmbH & Co. KG, 35745 Herborn (DE)
(72) Erfinder: BENNER, Rolf, D-35745 Herborn (DE); KÖHLER, Martina, D-35745 Herborn (DE); REUTER, Wolfgang, D-57299 Burbach 5 (DE)
(74) Vertreter: Fleck, Hermann-Josef, Dr.-Ing.
(86) Internationale Anmeldenummer: EP9706147
(87) Internationale Veröffentlichungsnummer: WO98023007

(56) Entgegenhaltungen:
- CH-A- 285 914
- DE-A- 2 043 699
- DE-A- 19 503 289
- DE-U- 9 406 323

## Beschreibung

Die Erfindung betrifft ein Rahmengestell aus Rahmenschenkeln für einen Schaltschrank, bei dem die Rahmenschenkel zwei Befestigungsansätze mit jeweils einem parallel zu den zugeordneten Außenseiten des Rahmengestells angeordneten Befestigungsabschnitt und einer vertikal zur zugeordneten Außenseite des Rahmengestells angeordneten Profilseite versehen sind, und wobei die Befestigungsabschnitte und die Profilseiten Reihen von in gleicher Teilung zueinander beabstandeten Befestigungsaufnahmen aufweisen.

Ein Rahmengestell dieser Art ist aus der DE 43 36 285 A1 bekannt. Solche Rahmenschenkel sind symmetrisch zu ihrer Querschnittsdiagonalen aufgebaut. An einem im Eckbereich des Rahmengestells nach außen weisenden Verbindungsabschnitt sind beidseitig der Querschnittsdiagonalen die Befestigungsansätze angeordnet. An den Befestigungsansätzen sind die Befestigungsabschnitte und die Profilseiten mit ihren Befestigungsaufnahmen angebracht. Der Befestigungsabschnitt und die Profilseite eines Befestigungsansatzes sind rechtwinklig zueinander angeordnet. An den Befestigungsaufnahmen lassen sich Montageschienen oder dgl. festlegen. An diesen können dann Einbauten, wie beispielsweise elektronische Einheiten, angebaut werden.

Derartige Montageschienen sind beispielsweise in der DE 1 95 03 289 beschrieben. Die im Querschnitt U-förmigen Montageschienen werden mit Winkeln an den Befestigungsaufnahmen der Befestigungsansätze zweier benachbarter vertikaler Rahmenschenkel angeschraubt.

Es ist Aufgabe der Erfindung, ein Rahmengestell der eingangs erwähnten Art zu schaffen, bei dem die Befestigungsstellen für die Einbauten standardisiert werden.

Diese Aufgabe der Erfindung wird dadurch gelöst, daß die Abstände der Profilseiten des einen Befestigungsansatzes zu den Befestigungsabschnitten des anderen Befestigungsansatzes jeweils gleich dem Teilungsabstand der Befestigungsrahmen ist oder daß der Abstand einem Vielfachen des Teilungsabstandes entspricht.

Dadurch, daß der Abstand der Befestigungsaufnahmen der Profilseiten zu den Befestigungsaufnahmen der Befestigungsabschnitte in festem Verhältnis zu dem Teilungsabstand der Befestigungsaufnahmen untereinander steht, läßt sich ein Rahmengestell schaffen, bei dem die Befestigungsstellen für die Einbauten ein räumliches Raster bilden. Die Einbauten können in diesem Raster beliebig im Rahmengestell eingebaut werden. Hierdurch wird eine hohe Variabilität für die Anbringungsmöglichkeiten von Einbauten eröffnet. Der Abstand kann hierbei gleich dem Teilungsabstand der Befestigungsaufnahmen sein oder er beträgt ein Vielfaches dieses Abstandes. Hierbei kann ein Vielfaches auch einen Bruchteil des Abstandes betragen. Wichtig ist, daß sich ein umlaufendes Befestigungsraster ergibt. In diesem Befestigungsraster können in den Reihen von Befestigungsaufnahmen auch "Zwischen-Befestigungsaufnahmen" innerhalb des Teilungssprungs verwendet sein.

Nach einer vorteilhaften Ausgestaltung der Erfindung ist es vorgesehen, daß die Befestigungsabschnitte zweier nebeneinander stehender vertikaler Rahmenschenkel des Rahmengestells eine erste Montageebene und die parallel hierzu stehenden Profilseiten eine zweite Montageebene bilden, und daß an den Befestigungsaufnahmen der Befestigungsabschnitte und der Profilseiten durchgehende Montageschienen befestigbar sind.

Die beiden Montageebenen sind hierbei zueinander im Teilungsabstand oder einem Vielfachen hiervon beabstandet. Mit den beiden parallelen Montageebenen ergeben sich Anbringungsmöglichkeiten für unterschiedlich breite Einbauten.

Vorteilhaft ist hierbei, wenn vorgesehen ist, daß die Montageschienen einen Tragabschnitt aufweisen, der in der ersten oder der zweiten Montageebene angeordnet ist und mit mindestens einer Reihe von Befestigungsaufnahmen versehen ist, wobei die Befestigungsaufnahmen zueinander einen gleichen Teilungsabstand aufweisen, der dem Teilungsabstand an den Profilseiten bzw. den Befestigungsabschnitten oder einem Vielfachen hiervon entspricht. Damit ist das Teilungsraster, das mit den Befestigungsaufnahmen der Rahmenschenkel gebildet wird, in den Montageschienen weitergeführt.

Eine einfache Ausgestaltung einer Montageschiene ist dadurch gekennzeichnet, daß sie im Querschnitt U-förmig aus dem Tragabschnitt und zwei hieran angeschlossenen, zueinander parallel beabstandeten Stegen gebildet ist.

Wenn vorgesehen ist, daß die Stege der Montageschiene mit Befestigungsaufnahmen versehen sind, dann sind weitere Anbringungsmöglichkeiten für Einbauten geschaffen. Auch bei diesen Reihen von Befestigungsaufnahmen ist ein festes Teilungsraster eingehalten.

Zur Anbringung der Montageschienen an den Rahmenschenkeln ist eine Ausgestaltung nach der Erfindung dadurch gekennzeichnet, daß an dem Tragabschnitt der Montageschiene stirnseitig vorstehende Lappen angeformt sind, die mit Befestigungselementen an den Befestigungsabschnitten oder den Profilseiten festlegbar sind, und daß die Lappen gegenüber dem Tragabschnitt versetzt sind, so daß der Tragabschnitt in der Ebene liegt, die durch die Profilseiten/Befestigungsabschnitte gebildet ist. Hierdurch ist sichergestellt, daß die Montageschienen auf den durch die Profilseiten/Befestigungsabschnitten gebildeten Montageebenen liegen.

Nach einer weiteren Ausgestaltung der Erfindung ist es möglich, daß an den Befestigungsabschnitten und/oder den Profilseiten Wandelemente anbringbar sind. Als Wandelemente lassen sich beispielsweise Verkleidungen anbringen, die eine ganze Seite oder nur einen Teilbereich der Seite des Rahmengestelles überdecken. Auch können die Wandelemente als Montageplatten ausgebildet sein.

Insbesondere ist hierbei möglich, daß parallel zu den Wandelementen Außenwände angeordnet sind, und daß zwischen den Wandelementen und den Außenwänden Schächte für beispielsweise Kabel, isolier-, Dämmaterial oder als Luftführungskanäle gebildet sind.

Die Erfindung wird im folgenden anhand eines in den Zeichnungen dargestellten Ausführungsbeispieles näher erläutert. Es zeigen:
- Fig. 1: in perspektivischer Darstellung einen Teilbereich eines Rahmengestells mit zwei Montageschienen und
- Fig. 2: in perspektivischer Teildarstellung einen vertikalen Rahmenschenkel des Rahmengestelles mit hieran angebauten Wandelementen.

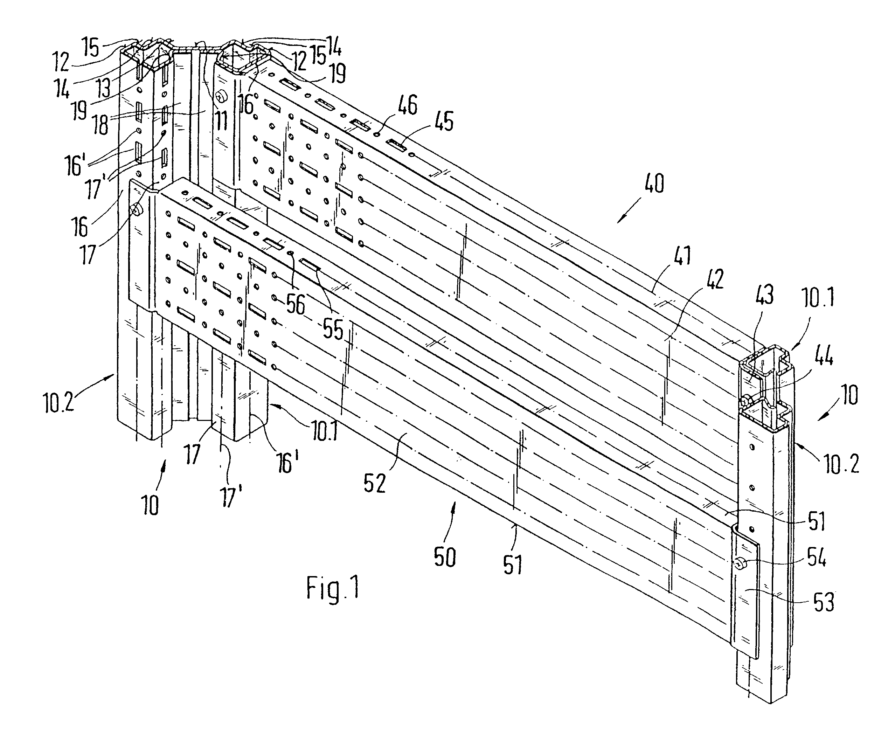

Die Fig. 1 zeigt zwei vertikale Rahmenschenkel 10 eines Rahmengestelles. Zur besseren Übersichtlichkeit ist in der Fig. 1 nur der linke Rahmenschenkel 10 detailliert mit Bezugszeichen versehen. Es sind jedoch alle vertikalen Rahmenschenkel 10 des Rahmengestelles identisch ausgebildet, so daß sie an allen Eckbereichen eingesetzt werden können.

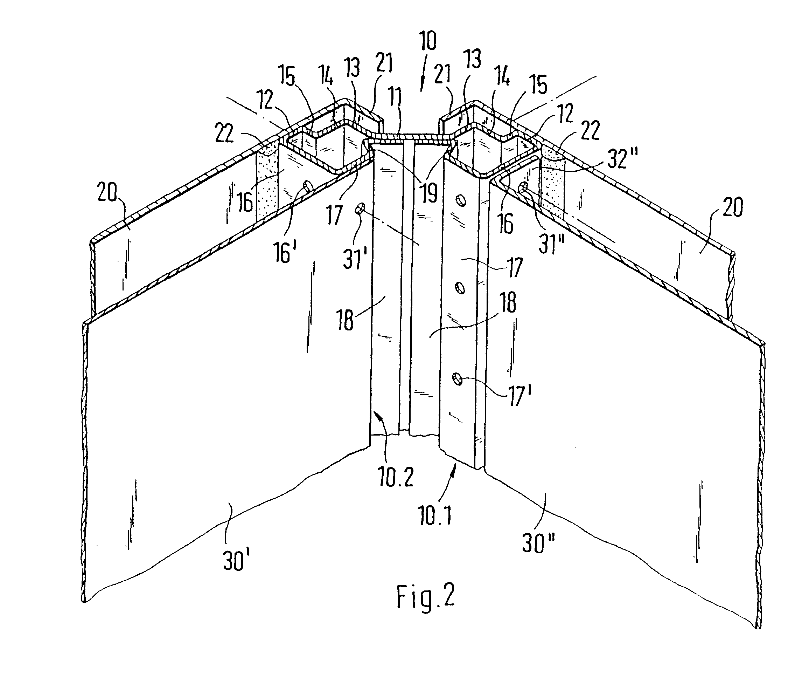

Der Rahmenschenkel 10 weist einen Verbindungsabschnitt 11 auf, an dem beidseitig Befestigungsabschnitte 10.1, 10.2 angeschlossen sind. Die beiden Befestigungsabschnitte 10.1, 10.2 sind wiederum identisch aufgebaut, so daß sich eine Symmetrie zur Querschnittsdiagonalen des Rahmenschenkels 10 ergibt. An den Verbindungsabschnitt 11 ist ein im Winkel stehender Stegabschnitt 23 angeschlossen. Dieser geht in eine rechtwinklige Abwinklung 14 über. Die Abwinklung 14 bildet zusammen mit der Abkantung 15 einen zurückversetzten Aufnahmeraum. In diesem Aufnahmeraum kann beispielsweise eine Abkantung eines Tür- oder Wandelementes aufgenommen werden. Es ist aber auch möglich, die Abkantung im Bereich der zwischen den Stegabschnitten 13 und dem Verbindungsabschnitt 11 gebildeten Rücksprung aufzunehmen. An die Abkantung 15 schließt sich rechtwinklig ein Dichtungs-Anlagesteg 12 an. An diesem Dichtungs-Anlagesteg kann ein Wandelement, wie es im einzelnen in der Fig. 2 mit 20 bezeichnet ist, angeschlagen und abgedichtet werden.

Wie sich aus der Fig. 1 weiter entnehmen läßt, trägt der Befestigungsabschnitt 10.1, 10.2 im Anschluß an den Dichtungs-Anlagesteg 12 zwei rechtwinklig zueinanderstehende Profilteile, die im einzelnen als Profilseite 16 und Befestigungsabschnitt 17 markiert sind. Die Profilseite 16 und der Befestigungsabschnitt 17 tragen jeweils eine Reihe von Befestigungsaufnahmen 16', 17', die vorliegend als Lochreihen ausgebildet sind. Die Befestigungsaufnahmen weisen zueinander einen einheitlichen Teilungsabstand auf.

Zwischen den beiden Befestigungsansätzen 10.1, 10.2 ist dem Innenraum es Rahmengestelles zugekehrt eine hinterschnittene Schwalbenschwanz-Nut mit Stegen 19 und Endabschnitten 18 gebildet. Die Endabschnitte 18 sind auf dem Verbindungssteg 11 aufgelegt und hieran fixiert, beispielsweise festgeschweißt.

Zwischen den beiden vertikalen Rahmenschenkeln 10 lassen sich Montageschienen 40, 50 befestigen. Die Montageschienen 40, 50 sind im Querschnitt U-förmig aus einem Tragabschnitt 42, 52 und hieran angeschlossene, zueinander parallel beabstandete Stege 41, 51 gebildet. In den Tragabschnitt 42, 52 und die Stege 41, 51 der Montageschienen 40, 50 sind wiederum Reihen von Befestigungsaufnahmen 45, 46, 55, 56 eingebracht. Hierbei sind wechselseitig Löcher und Schlitze vorgesehen. Die Löcher weisen zueinander einen gleichen Teilungsabstand auf. Ebenso sind die Schlitze zueinander um das Maß dieses Teilungsabstandes versetzt. Der Teilungsabstand der Löcher und der Schlitze entspricht wieder dem Teilungsabstand, wie er mit den Befestigungsaufnahmen 16, 17' in den Profilseiten 16 bzw. Befestigungsabschnitten 17 verwirklicht ist. Zur Anbringung der Montageschienen 40, 50 sind die Tragabschnitte 42, 52 stirnseitig mittels Lappen 43, 53 verlängert. In diese Lappen 43, 53 sind Schraubaufnahmen eingebracht, in die Befestigungselemente 44, 54 eingeführt und mit den Befestigungsaufnahmen 16', 17' der Profilseiten 16 bzw. Befestigungsabschnitte 17 verbunden. Die Lappen 43,53 sind an ihrer dem vertikalen Rahmenschenkel 10 zugekehrten Seite mit Haken und/oder Zapfen versehen. Mit diesen können die Montageschienen 40,50 an den Befestigungsaufnahmen 16',17' vorpositioniert werden.

Der Abstand der Profilseiten 16 des einen Befestigungsansatzes 10.1, 10.2 zu dem Befestigungsabschnitt 17 des anderen Befestigungsansatzes 10.1, 10.2 entspricht im vorliegenden Fall dem Teilungsabstand der Befestigungsaufnahmen 16, 17', 45, 46, 55, 56. Damit bilden die Tragabschnitte 42, 52 der Montageschienen 40, 50 zwei zueinander parallel versetzte Montageebenen. Der Versatz entspricht hierbei dem Maß des Teilungsabstandes.

Wie aus der Darstellung nach Fig. 1 ersichtlich ist, sind die Tragabschnitte 42, 52 fluchtend zu den Profilseiten 16 bzw. zu dem Befestigungsabschnitt 17 ausgerichtet. Hierzu sind an den Lappen 43, 53 Übergangsabschnitte angeformt, die den Tragabschnitt 42, 52 halten. Die Lochreihen in den Stegen 41, 51 der Montageschienen'40, 50 gehen in die zugeordneten Lochreihen der Befestigungsabschnitte 17 bzw. der Profilseiten 16 über.

In der Fig. 2 ist die Anbringung von Wandelementen an dem Rahmenschenkel 10 dargestellt, wie er in Fig. 1 näher erläutert wurde. An den nach außen gekehrten Dichtungs-Anlagestegen 12 können die Wandelemente 20 angelegt werden. Sie tragen Dichtungen 22, mit denen sie sich dichtend an den Dichtungs-Anlagesteg 12 anlegen. Die Abkantungen 21 der Wandelemente 20 ragen in den vor dem Verbindungsabschnitt 11 gebildeten Aufnahmeraum ein. Der Aufnahmeraum ist gegenüber den Außenseiten des Gestellrahmens zurückversetzt. An dem linken Befestigungsansatz 10.2 läßt sich ein Wandelement 30' anbringen. Hierzu ist das Wandelement 30' mit Schraubaufnahmen 31' versehen. In diese Schraubaufnahmen 31' können Befestigungsschrauben eingesetzt und mit den Befestigungsaufnahmen 17' des Befestigungsabschnittes 17 verschraubt werden. Das Wandelement 30 kann im vorliegenden Fall als Montageplatte eingesetzt werden, an der Einbauten festgemacht werden. Zwischen dem Wandelement 20 und der Montageplatte ist ein Schacht gebildet, in dem Installations- und Dämmaterial eingebracht werden kann, oder er kann als Luftführungskanal genutzt werden.

An dem Befestigungsansatz 10.1 ist eine alternative Anbringung eines weiteren Wandelementes 30" dargestellt. Das Wandelement 30" besitzt eine zur Außenseite des Gestellrahmens gekehrte Abkantung 32". In diese Abkantung 32" sind Bohrungen 31" eingebracht. Mit diesen Bohrungen 31" kann das Wandelement 30" mit der Profilseite 16 des Befestigungsansatzes 10.1 verschraubt werden. Wenn das Wandelement 30" fixiert ist, kann das die Außenseite des Gestellrahmens abdeckende Wandelement 20 angebracht werden. Auch hier ist wieder zwischen den Wandelementen 20 und 30" ein Schacht geschaffen.

In den vorliegenden Beispielen ist jeweils gezeigt, daß zwei räumlich voneinander getrennte Befestigungsansätze 10.1, 10.2 an einem Verbindungssteg 11 festgemacht sind. Nach dem Kern der Erfindung ist es jedoch auch möglich, daß die beiden Befestigungsansätze 10.1, 10.2 miteinander vereinigt sind.

Wichtig ist, daß die erfindungsgemäßen Teilungsabstände zwischen den Profilseiten 16 und den Befestigungsansätzen 17 eingehalten sind.

## Patentansprüche

1. Rahmengestell aus Rahmenschenkeln (10) für einen Schaltschrank, bei dem die Rahmenschenkel (10) zwei Befestigungsansätze (10.1, 10.2) mit jeweils einem parallel zu den zugeordneten Außenseiten des Rahmengestells angeordneten Befestigungsabschnitt (17) und einer vertikal zur zugeordneten Außenseite des Rahmengestells angeordneten Profilseite (16) versehen sind, und wobei die Befestigungsabschnitte (17) und die Profilseiten (16) Reihen von in gleicher Teilung zueinander beabstandeten Befestigungsaufnahmen (16',17') aufweisen, **dadurch gekennzeichnet,**
**daß** die Abstände der Profilseiten (16) des einen Befestigungsansatzes (10.1) zu den Befestigungsabschnitten (17) des anderen Befestigungsansatzes (10.2) jeweils gleich dem Teilungsabstand der Befestigungsaufnahmen (16',17') ist oder
**daß** der Abstand einem Vielfachen des Teilungsabstandes entspricht.

2. Rahmengestell nach Anspruch 1,
**dadurch gekennzeichnet,**
**daß** die Befestigungsabschnitte (17) zweier nebeneinander feststehender vertikaler Rahmenschenkel (10) des Rahmengestells eine erste Montageebene und die parallel hierzu stehenden Profilseiten (16) eine zweite Montageebene bilden, und
**daß** an den Befestigungsaufnahmen (16', 17') der Befestigungsabschnitte (17) und der Profilseiten (16) Montageschienen (40,50) befestigbar sind.

3. Rahmengestell nach Anspruch 2,
**dadurch gekennzeichnet,**
**daß** die Montageschienen (40,50) einen Tragabschnitt (42) aufweisen, der in der ersten oder der zweiten Montageebene angeordnet ist und mit mindestens einer Reihe von Befestigungsaufnahmen (45,46, 55,56) versehen ist, wobei die Befestigungsaufnahmen (45,46, 55,56) zueinander einen gleichen Teilungsabstand aufweisen, der dem Teilungsabstand an den Profilseiten (16) bzw. den Befestigungsabschnitten (17) oder einem Vielfachen hiervon entspricht.

4. Rahmengestell nach Anspruch 2 oder 3,
**dadurch gekennzeichnet,**
**daß** die Montageschienen (40,50) im Querschnitt U-förmig aus dem Tragabschnitt (42) und zwei hieran angeschlossenen, zueinander parallel beabstandeten Stegen (41,51) gebildet sind.

5. Rahmengestell nach Anspruch 4,
**dadurch gekennzeichnet,**
**daß** die Stege (41,51) der Montageschiene (40,50) mit Befestigungsaufnahmen (45,46, 55,56) versehen sind.

6. Rahmengestell nach Anspruch 4 oder 5,
**dadurch gekennzeichnet,**
**daß** an dem Tragabschnitt (42,52) der Montageschiene (40,50) stirnseitig vorstehende Lappen (43,53) angeformt sind, die mit Befestigungselementen (44,45) an den Befestigungsabschnitten (17) oder den Profilseiten (16) festlegbar sind und
**daß** die Lappen (43,53) gegenüber dem Tragabschnitt (42,52) versetzt sind, so daß der Tragabschnitt (42,52) in der Ebene liegt, die durch die Profilseiten (16) Befestigungsabschnitte (17) gebildet ist.

7. Rahmengestell nach einem der Ansprüche 1 bis 6,
**dadurch gekennzeichnet,**
**daß** an den Befestigungsabschnitten (17) und/oder den Profilseiten (16) Wandelemente (30',30") anbringbar sind.

8. Rahmengestell nach Anspruch 7,
**dadurch gekennzeichnet,**
**daß** parallel zu den Wandelementen (30',30") Außenwände (20) angeordnet sind, und
**daß** zwischen den Wandelementen (30',30") und den Außenwänden (20) Schächte für Kabel, Isolier- oder Dämmaterial oder dgl. gebildet sind.

## Claims

1. Framework comprising frame legs (10) for a switch cabinet, in the case of which the frame legs (10) are provided with two fastening extensions (10.1, 10.2) in each case with a fastening section (17), which is arranged parallel to the associated outer sides of the framework, and a profile side (16), which is arranged perpendicularly to the associated outer side of the framework, the fastening sections (17) and the profile sides (16) having rows of fastening mounts (16', 17') which are spaced apart from one another at equal intervals, **characterized in that** the spacing between the profile sides (16) of the one fastening extension (10.1) and the fastening sections (17) of the other fastening extension (10.2) is equal in each case to the interval between the fastening mounts (16', 17'), or **in that** the spacing corresponds to a multiple of the interval.

2. Framework according to Claim 1, **characterized in that** the fastening sections (17) of two vertical frame legs (10) of the framework which are secured one beside the other form a first installation plane and the profile sides (16) located parallel thereto form a second installation plane, and **in that** installation rails (40, 50) can be fastened on the fastening mounts (16', 17') of the fastening sections (17) and of the profile sides (16).

3. Framework according to Claim 2, **characterized in that** the installation rails (40, 50) have a carrying section (42) which is arranged in the first or the second installation plane and is provided with at least one row of fastening mounts (45, 46, 55, 56), the fastening mounts (45, 46, 55, 56) being spaced apart from one another by an equal interval in each case, this interval corresponding to the interval on the profile sides (16) and the fastening sections (17) or a multiple thereof.

4. Framework according to Claim 2 or 3, **characterized in that** the installation rails (40, 50) are formed in a cross-sectionally U-shaped manner from the carrying section (42) and two crosspieces (41, 51) which are connected to the latter and are spaced apart parallel to one another.

5. Framework according to Claim 4, **characterized in that** the crosspieces (41, 51) of the installation rail (40, 50) are provided with fastening mounts (45, 46, 55, 56).

6. Framework according to Claim 4 or 5, **characterized in that** integrally formed on the carrying section (42, 52) of the installation rail (40, 50) are lugs (43, 53) which project on the end sides and can be secured on the fastening sections (17) or the profile sides (16) by means of fastening elements (44, 45), and **in that** the lugs (43, 53) are offset in relation to the carrying section (42, 52), with the result that the carrying section (42, 52) is located in the plane which is formed by the profile sides (16)/fastening sections (17).

7. Framework according to one of Claims 1 to 6, **characterized in that** wall elements (30', 30'') can be fitted on the fastening sections (17) and/or the profile sides (16).

8. Framework according to Claim 7, **characterized in that** outer walls (20) are arranged parallel to the wall elements (30', 30''), and **in that** shafts for cables, insulating material or the like are formed between the wall elements (30', 30'') and the outer walls (20).

## Revendications

1. Structure de cadre constituée de branches de cadre (10) pour une armoire de distribution, dans laquelle les branches de cadre (10) sont pourvues de deux pièces de fixation (10.1, 10.2) avec à chaque fois une portion de fixation (17) disposée parallèlement aux côtés extérieurs associés de la structure de cadre et d'un côté profilé (16) disposé verticalement par rapport au côté extérieur associé de la structure de cadre, et où les portions de fixation (17) et les côtés profilés (16) présentent une rangée de logements de fixation (16', 17') espacés les uns des autres de manière équidistante,
**caractérisée en ce que**
les distances des côtés profilés (16) d'une pièce de fixation (10.1) aux portions de fixation (17) de l'autre pièce de fixation (10.2) sont à chaque fois égales à la distance de séparation des logements de fixation (16', 17') ou **en ce que**
la distance correspond à un multiple de la distance de séparation.

2. Structure de cadre selon la revendication 1,
**caractérisée en ce que**
les portions de fixation (17) de deux branches de cadre (10) voisines verticales fixes de la structure de cadre forment un premier plan de montage et les côtés profilés (16) parallèles à celles-ci forment un deuxième plan de montage et **en ce que** des rails de montage (40, 50) peuvent être fixés sur les logements de fixation (16', 17') des portions de fixation (17) et des côtés profilés (16).

3. Structure de cadre selon la revendication 2,
**caractérisée en ce que**
les rails de montage (40, 50) présentent une portion de support (42) qui est disposée dans le premier ou dans le deuxième plan de montage et qui est pourvue d'au moins une rangée de logements de fixation (45, 46, 55, 56), les logements de fixation (45, 46, 55, 56) présentant les uns avec les autres une distance de séparation égale, qui correspond à la distance de séparation sur les côtés profilés (16) ou les portions de fixation (17), ou à un multiple de celle-ci.

4. Structure de cadre selon la revendication 2 ou 3,
**caractérisée en ce que**
les rails de montage (40, 50) sont formés avec une forme en U en section transversale à partir de la portion de support (42) et de deux ailes latérales (41, 51) espacées parallèlement l'une à l'autre, raccordées à celle-ci.

5. Structure de cadre selon la revendication 4,
**caractérisée en ce que**
les ailes (41, 51) des rails de montage (40, 50) sont pourvues de logements de fixation (45, 46, 55, 56).

6. Structure de cadre selon la revendication 4 ou 5,
**caractérisée en ce que**
des pattes (43, 53) saillant du côté frontal sont formées sur la portion de support (42, 52) des rails de montage (40, 50), et peuvent être fixées avec les éléments de fixation (44, 45) sur les portions de fixation (17) ou sur les côtés profilés (16) et **en ce que** les pattes (43, 53) sont décalées par rapport à la portion de support (42, 52) de telle sorte que la portion de support (42, 52) se trouve dans le plan qui est formé par les côtés profilés (16) et/ou les portions de fixation (17).

7. Structure de cadre selon l'une quelconque des revendications 1 à 6,
**caractérisée en ce que**
des éléments de paroi (30', 30") peuvent être appliqués contre les portions de fixation (17) et/ou les côtés profilés (16).

8. Structure de cadre selon la revendication 7,
**caractérisée en ce que**
des parois extérieures (20) sont disposées parallèlement aux éléments de paroi (30', 30") et **en ce qu'**entre les éléments de paroi (30', 30") et les parois extérieures (20) sont formées des gaines pour des câbles, des matériaux isolants ou amortissants ou similaires.
